# EUROPÄISCHE PATENTSCHRIFT

(11) **EP 0 896 899 B1**
(45) Veröffentlichungstag und Bekanntmachung des Hinweises auf die Patenterteilung: **02.09.2009**
(21) Anmeldenummer: 98113338.2
(22) Anmeldetag: 17.07.1998
(51) Int. Cl.: B60Q 1/26, H05B 33/08

(54) **Heckleuchte von Kraftfahrzeugen**
Vehicle lights
Feux pour véhicule

(30) Priorität: 12.08.1997 DE 19734750
(43) Veröffentlichungstag der Anmeldung: 17.02.1999
(73) Patentinhaber: odelo GmbH, 71409 Schwaikheim (DE)
(72) Erfinder: Weiss, Achim, 75038 Oberderdingen (DE); Gauch, Winfried Hardy, 71106 Magstadt (DE)
(74) Vertreter: Meyer, Thorsten

(56) Entgegenhaltungen:
- EP-A- 0 342 814
- EP-A- 0 660 648
- DE-A- 4 202 776
- US-A- 4 654 629
- US-A- 5 325 271

## Beschreibung

Die Erfindung betrifft eine Heckleuchte von Kraftfahrzeugen.

Bisher sind LED-Leuchten nur als hochgesetzte Bremsleuchten in Kraftfahrzeugen eingesetzt. Die Anpassung der LEDs an die Fahrzeugspannung wird über Vorwiderstände realisiert. Dadurch kann es bei bestimmten Betriebszuständigen zu einer Stromüberlastung und einer Temperaturüberlastung der LEDs kommen. Die Folge der Überlastung kann ein Nachlassen der Lichtleistung bis zum Ausfall oder eine Veränderung der Lichtfarbe sein.

Es sind Heckleuchten von Zügen bekannt (US-A-4 654 629), die durch LEDs gebildet sind, die über einen Spannungsbereich mit konstantem Strom betrieben werden.

Der Erfindung liegt die Aufgabe zugrunde, die Heckleuchte so auszubilden, dass sie in jedem Betriebszustand des Kraftfahrzeuges zuverlässig arbeitet.

Diese Aufgabe wird bei der Heckleuchte erfindungsgemäß mit den Merkmalen des Anspruches 1 gelöst.

Bei der erfindungsgemäßen Heckleuchte wird zumindest eines ihrer Lichter, vorzugsweise alle Lichter, durch LEDs gebildet. Der Betriebsstrom der LEDs wird über einen Spannungsbereich zumindest annähernd konstant gehalten. Dadurch kommt es zu keiner Stromüberlastung und/oder Temperaturüberlastung der LEDs. Ihre Lichtleistung bleibt darum über die Einsatzdauer zumindest angenähert konstant. Auch tritt eine Veränderung ihrer Lichtfarbe nicht ein. Der Überspannungsschutz verhindert eine Überlastung des nachgeschalteten Reglers. Wird der vorgegebene Spannungswert überschritten, wird der Regler in einen Grundzustand geschaltet, in dem eine Überlastung des Reglers ausgeschlossen ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: ein Blockschaltbild einer erfindungsgemäßen Steuereinrichtung für LEDs,
- Fig. 2a bis Fig. 2f: verschiedene Schaltungsbeispiele für in Gruppen angeordnete LEDs,
- Fig. 3: das Schaltbild einer Niederspannungsstufe der erfindungsgemäßen Steuereinrichtung gemäß Fig. 1,
- Fig. 4: das Schaltbild einer Gesamtausfallerkennung der erfindungsgemäßen Steuereinrichtung gemäß Fig. 1,
- Fig. 5: das Schaltbild eines Konstantstromreglers der erfindungsgemäßen Steuereinrichtung gemäß Fig. 1,
- Fig. 6: das Schaltbild eines Überspannungsschutzes der erfindungsgemäßen Steuerungseinrichtung gemäß Fig. 1,
- Fig. 7: das Schaltbild einer LED-Ausfallerkennung der erfindungsgemäßen Steuereinrichtung gemäß Fig. 1.

Die Steuereinrichtung ist für den Betrieb einer Heckleuchte eines Kraftfahrzeuges vorgesehen, die LEDs als Leuchtmittel aufweist. Mit der Steuereinrichtung wird eine konstante Helligkeit der LEDs, vorzugsweise über den gesamten Spannungsverlauf, erreicht.

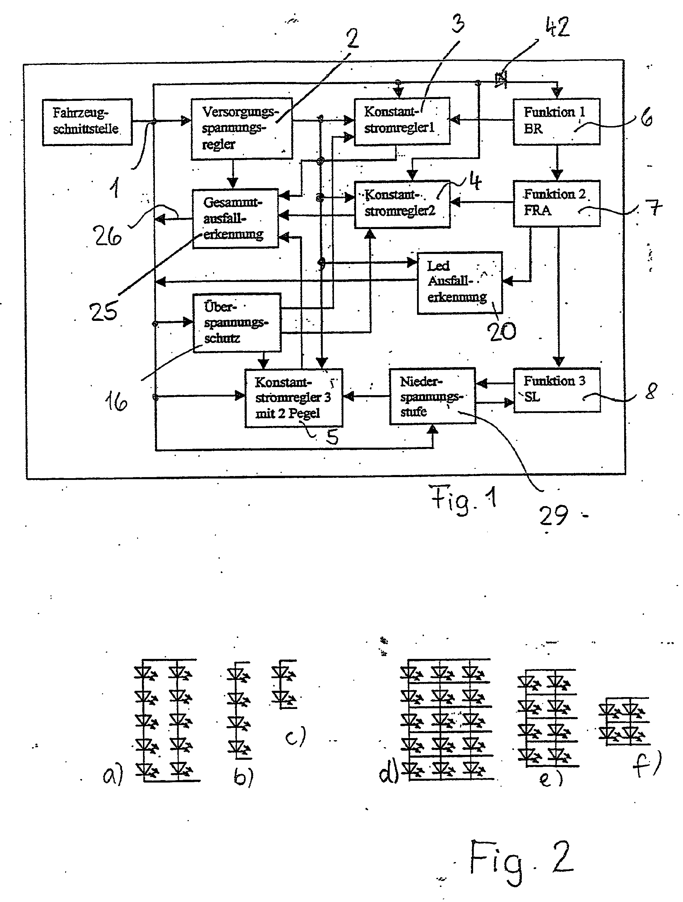

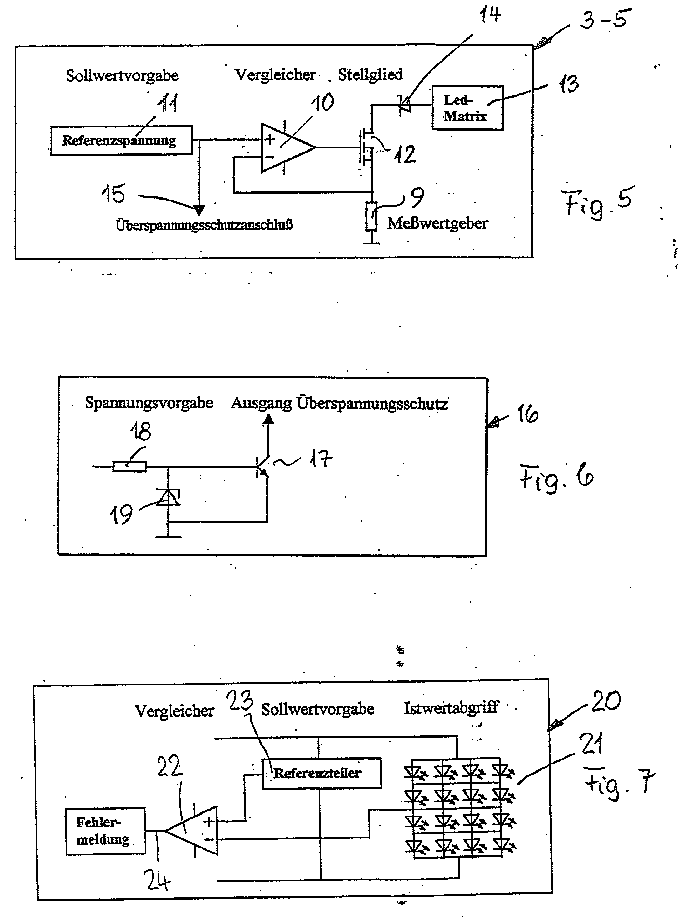

Die Steuereinrichtung hat eine Schnittstelle 1 (Fig. 1), über die die Steuerelektronik vom Bordnetz des Kraftfahrzeuges ein Funktionssignal erhält. Es aktiviert die Steuereinrichtung, mit der dann die zugeordneten LEDs angesteuert werden. Der Schnittstelle 1 nachgeschaltet ist ein Versorgungsspannungsregler 2, mit der die Steuereinrichtung ihre Versorgungsspannung aus dem über die Schnittstelle 1 zugeführten Steuersignal erzeugt. Der Versorgungsspannungsregler 2 ist so ausgebildet, daß die Ruhestromaufnahme kleiner als 1 mA ist. Dem Versorgungsspannungsregler 2 sind unter Zwischenschaltung einer Diode 42 Konstantstromregler 3 bis 5 nachgeordnet. Der Konstantstromregler 3 ist dem Bremslicht 6, der Konstantstromregler 4 dem Blinklicht 7 und der Konstantstromregler 5 dem Schlußlicht 8 der Heckleuchte zugeordnet. Die Konstantstromregler 3 bis 5 sind jeweils gleich ausgebildet und messen den Strom an einem Meßwiderstand 9 (Fig. 5). Der gemessene Widerstand wird mittels eines Vergleichers 10 mit einer Referenzspannung 11 verglichen. Das Ausgangssignal des Vergleichers 10 wird einem Stellglied 12 zugeführt, das vorzugsweise ein Leistungs-MOSFET ist. Über dieses Stellglied 12 wird eine LED-Matrix 13 unter Zwischenschaltung einer Schutzdiode 14 geregelt. Die Steuereinrichtung überwacht die Bordnetzspannung. Wird ein vorgegebener Spannungswert Uₘₐₓ überschritten, so schaltet der Konstantstromregler 3 bis 5 in einen definierbaren sicheren Zustand, um eine Überlastung des Stellgliedes 12 zu verhindern. Der Konstantstromregler 3 bis 5 hat für den Überspannungsschutz einen entsprechenden Anschluß 15. Der Konstantstromregler 3 bis 5 ist vorteilhaft für einen Arbeitsbereich von 9 Volt bis 16 Volt ausgelegt.

Den Konstantstromreglern 3 bis 5 ist ein gemeinsamer Überspannungsschutz 16 zugeordnet, um eine Überlastung des Stellgliedes 12 des jeweiligen Konstantstromreglers 3 bis 5 zu verhindern. Wie Fig. 6 zeigt, hat der Überspannungsschutz 16 ein Stellglied 17 in Form eines Transistors. Ihm vorgeschaltet sind ein Widerstand 18 und eine Schutzdiode 19. Mit dem Widerstand 18 erfolgt die Spannungsvorgabe. Der Überspannungsschutz 16 ist, wie Fig. 1 zeigt, an die Schnittstelle 1 der Steuereinrichtung angeschlossen. Sobald der vorgegebene Spannungswert Uₘₐₓ überschritten wird, wird über das Stellglied 17 des Überspannungsschutzes 16 der jeweilige Konstantstromregler 3 bis 5 so geschaltet, daß eine Überlastung des Stellgliedes 12 des jeweiligen Konstantstromreglers 3 bis 5 ausgeschlossen ist.

Über den Versorgungsspannungsregler 2 ist an die Schnittstelle 1 eine LED-Ausfallerkennung 20 angeschlossen. Sie ist dem Blinklicht 7 zugeordnet und überwacht den Ausfall einer LED des Blinklichtes 7, das durch eine LED-Matrix gebildet wird. Fig. 7 zeigt die LED-Matrix 21, welche das Blinklicht 7 bildet. Die LED-Matrix 21 ist als Vierer-Matrix ausgebildet, die vier Reihen mit je vier LEDs aufweist. An der LED-Matrix 21 erfolgt ein Istwertabgriff, d.h. es wird die Spannung über der oberen und der unteren Matrixhälfte mittels eines Vergleichers 22 verglichen. Er erhält den an der LED-Matrix 21 gemessenen Ist-Spannungswert und vergleicht ihn mit einem über einen Spannungsteiler 23 zugeführten Soll-Spannungswert. Sind alle LEDs der LED-Matrix 21 in Ordnung, ist nur eine bauteilbedingte geringe Abweichung zwischen den Spannungen der oberen und der unteren Matrixhälfte festzustellen. Fällt in der einen Matrixhälfte eine LED aus, so steigt der Spannungsabfall in dieser Matrixhälfte an. Der Vergleicher 22 gibt dann ein entsprechendes Ausgangssignal ab, das ausgewertet werden kann. Dieses Ausgangssignal 24 des Vergleichers 22 wird der Schnittstelle 1 zugeführt, über die beispielsweise ein optisches und/oder akustisches Signal im Kraftfahrzeug ausgelöst werden kann, das den Fahrer darauf hinweist, daß zumindest eine LED im Blinklicht 7 ausgefallen ist.

Da mit der Ausfallerkennung 20 der Spannungsabfall über beide Hälften der LED-Matrix gemessen wird, kann für das Blinklicht 7 nur eine Zweier-, Vierer-, Sechser- usw. Matrix vorgesehen werden. Der exakt zeitgleiche Ausfall einer LED in jeder Matrixhälfte ist äußerst unwahrscheinlich.

Die beschriebene Ausfallerkennung 20 kann auch für das Bremslicht 6 oder das Schlußlicht 8 eingesetzt werden.

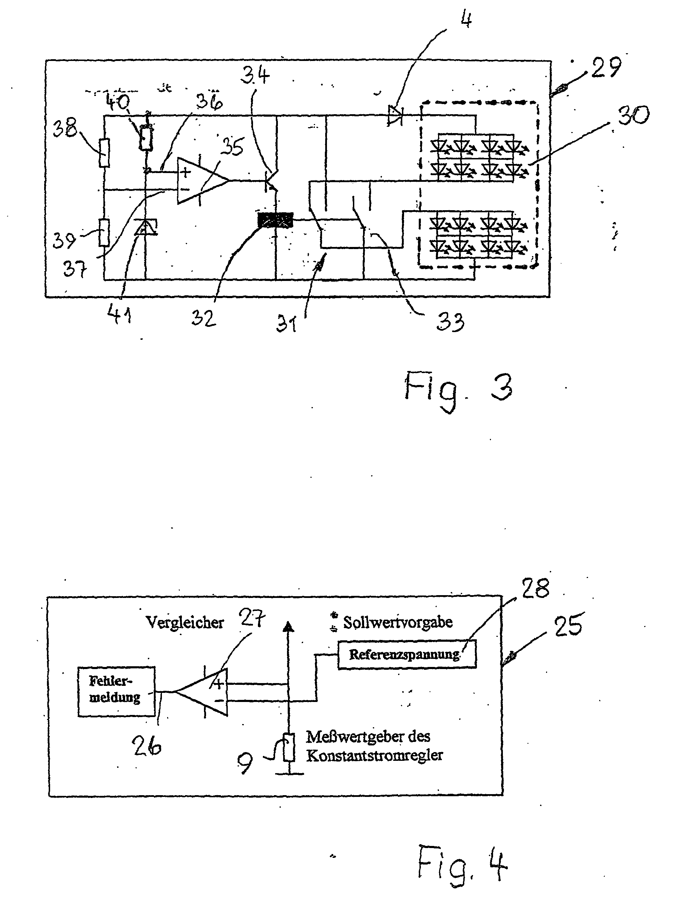

Um einen Gesamtausfall einer Funktion der Heckleuchte des Kraftfahrzeuges beispielsweise durch einen Kabelbruch oder einen Steckerschaden zu erfassen, ist eine Gesamtausfallerkennung 25 vorgesehen (Fig. 1 und 4), an die über die Konstantstromregler 3 bis 5 das Bremslicht, das Blinklicht 7 und das Schlußlicht 8 angeschlossen sind. Das Ausgangssignal 26 der Gesamtausfallerkennung 25 wird der Schnittstelle 1 zugeführt. Über die Schnittstelle 1 kann ein optisches und/oder akustisches Signal im Fahrzeug ausgelöst werden, um den Fahrer darauf aufmerksam zu machen, daß die Heckleuchte des Kraftfahrzeuges vollständig ausgefallen ist.

Die Gesamtausfallerkennung 25 hat einen Vergleicher 27 (Fig. 4), der eine Referenzspannung 28 mit einem Ist-Spannungswert vergleicht, der mittels des Meßwiderstandes 9 des jeweiligen Konstantstromreglers 3 bis 5 gemessen wird. Fällt die Heckleuchte aus, erzeugt der Vergleicher 27 das Ausgangssignal 26, das der Schnittstelle 1 zugeführt wird.

Dem Schlußlicht 8 ist eine Niederspannungsstufe 29 zugeordnet, die dafür sorgt, daß das Schlußlicht 8 unterhalb einer Grenzspannung beispielsweise von einer Vierer-Matrix auf eine Zweier-Matrix umgeschaltet wird. Wie Fig. 3 zeigt, wird das Schlußlicht 8 durch eine LED-Matrix 30 gebildet, der ein Relais 31 mit einer Spule 32 und Schaltkontakten 33 und eine Diode 43 vorgeschaltet sind. Das Relais 31 wird über ein Stellglied 34, vorzugsweise einen Transistor, gesteuert. Dem Relais 31 vorgeschaltet ist ein Vergleicher 35, der einen Sollspannungswert 36 mit einem gemessenen Istspannungswert 37 vergleicht. Zur Spannungserfassung ist ein Spannungsteiler aus zwei in Serie geschalteten Widerständen 38, 39 vorgesehen. Der Sollwert wird durch einen Widerstand 40 und eine Z-Diode 41 gebildet.

Die Stromregelung ist für einen Arbeitsbereich von vorzugsweise etwa 9 Volt bis etwa 16 Volt ausgelegt. Um das Schlußlicht 8 bis zu einer Spannung von beispielsweise 6 Volt betreiben zu können, wird die beispielhaft vorgesehene Vierer-Matrix 30 auf eine Zweier-Matrix umgeschaltet. Die Regelelektronik selbst arbeitet abwärts bis zu einer Spannung von im Ausführungsbeispiel 5,1 Volt. Diese Umschaltfunktion kann, falls dies gewünscht wird, auch für das Bremslicht 6 und/oder das Blinklicht 7 eingesetzt werden. Um die Vierer-Matrix 30 des Schlußlichtes 8 auf die Zweier-Matrix umzuschalten, wird das Relais 31 über das Stellglied 34 umgeschaltet.

Das Schlußlicht 8 hat zwei Strompegel. Das Schlußlicht kann eine Schlußlichtfunktion und eine Bremsfunktion haben. Für die normale Schlußlichtfunktion reicht ein niederer Strom aus. Für die Bremsfunktion ist ein hoher Strom erforderlich, da die LEDs für das Schlußlicht 8 zusammen mit den LEDs des Bremslichtes 7 angesteuert werden. Der Stromwert kann über eine Veränderung am Vorgabespannungsteiler des jeweiligen Konstantstromreglers 3 bis 5 frei eingestellt werden. Die Pegelumschaltung wird durch Parallelschalten eines zusätzlichen Widerstandes am Spannungsteiler erreicht.

Die Einstellung wenigstens zweier Strompegel und deren Ansteuerung durch verschiedene Signale ist auch beim Bremslicht 6 und/oder beim Blinklicht 7 möglich.

Die das Bremslicht 6, das Blinklicht 7 und das Schlußlicht 8 bildenden LEDs sind vorteilhaft in Matrixform angeordnet. Dies hat den Vorteil, daß beim Ausfall einer LED die anderen LEDs weiterhin leuchten. Wird auf diese Sicherheit kein Wert gelegt, können die LEDs auch, wie die Fig. 2a bis 2c zeigen, in Reihe geschaltet sein. Fig. 2a zeigt die Möglichkeit, die LEDs in Fünferreihen parallel zueinander zu schalten. Fig. 2b zeigt vier in Reihe geschaltete LEDs, während aus Fig. 2c hervorgeht, daß die LEDs auch in einer Zweierreihe angeordnet sein können.

Die Fig. 2d bis 2f zeigen Beispiele für Matrixschaltungen der LEDs. Gemäß Fig. 2d sind die LEDs in einer Fünfer-Matrix, gemäß Fig. 2e in einer Vierer-Matrix und gemäß Fig. 2f in einer Zweier-Matrix angeordnet. Im dargestellten Ausführungsbeispiel wird für das Bremslicht 6, das Blinklicht 7 und das Schlußlicht 8 vorteilhaft eine Vierer-Matrix gewählt, um bei einer Vorwärtsspannung von etwa 2,5 Volt pro LED möglichst wenig Verlustleistung am Stellglied 14 des jeweiligen Konstantstromreglers 3 bis 5 zu erhalten. Bei anderen Betriebsspannungen oder LEDs mit anderen Vorwärtsspannungen sind auch Zweier-, Dreier-, Fünfer- oder andere Matrixanordnungen der LEDs möglich.

Mit der beschriebenen Steuereinrichtung wird der Strom für die LEDs der verschiedenen Lichter der Heckleuchte des Kraftfahrzeuges über einen bestimmten Spannungsbereich durch eine Regelung konstant gehalten. Die Stromerfassung in den jeweiligen Stromreglern 3 bis 5 erfolgt jeweils über den Meßwertgeber 9 in Form eines Meßwiderstandes. Die Stromregelung kann mehrere frei einstellbare Strompegel haben, wie dies beispielhaft für das Schlußlicht 8 anhand der Fig. 3 erläutert worden ist. Die Einstellung der verschiedenen Strompegel erfolgt über ein veränderbares Teilerverhältnis der verschiedenen Widerständen 38 bis 40 der Niederspannungsstufe 29. Die Stromregler 3 bis 5 werden vor Überspannung geschützt. Bei Auftreten einer Spannung, die einen vorgegebenen Höchstspannungswert Uₘₐₓ überschreitet, werden die Stromregler 3 bis 5 in einen definierten Zustand gebracht, bei dem für die LEDs des Bremslichtes 6, des Blinklichtes 7 und des Schlußlichtes 8 sowie für die Stromregler 3 bis 5 keine Gefahr besteht. Das Schlußlicht 8 kann bis zu einer Spannung von Uₘᵢₙ betrieben werden, da ab einer Schaltschwelle die beispielhaft für das Schlußlicht 8 verwendete Vierer-Matrix 30 in eine Zweier-Matrix umgeschaltet wird. So ist beispielsweise der Betrieb des Schlußlichtes 8 als Vierer-LED-Matrix erst ab einer Spannung von beispielsweise 3,5 Volt oberhalb von Uₘᵢₙ möglich. Der Strom für das Bremslicht 6, das Blinklicht 7 und das Schlußlicht 8 wird durch die Gesamtausfallerkennung 25 überwacht und angezeigt. Mit der LED-Ausfallerkennung 20 wird die Spannung über die beiden Hälften der LED-Matrix 21 überwacht, um den Ausfall einzelner LEDs zu erfassen. Fällt eine LED in der LED-Matrix 21 aus, macht sich dies durch einen Ansteig des Spannungsabfalles an der entsprechenden Matrixhälfte bemerkbar. Da der Betriebsstrom für die LEDs innerhalb eines bestimmten Spannungsbereiches konstant gehalten wird, wird eine optimale Lichtausbeute der LEDs erhalten. Auch die Chiptemperatur der LEDs kann sehr gering gehalten werden, so daß die LEDs eine lange Lebensdauer haben.

## Patentansprüche

1. Heckleuchte von Kraftfahrzeugen, mit einem Brems-, einem Blink- und einem Schlusslicht (6 bis 8), von denen zumindest eines der Lichter (6 bis 8) durch LEDs gebildet ist, die über einen Spannungsbereich mit zumindest annähernd konstantem Strom betrieben werden, und mit einem dem Licht (6 bis 8) vorgeschalteten Überspannungsschutz (16), der einem Stromregler (3 bis 5) vorgeschaltet ist und bei Überschreiten einer vorgegebenen Spannung (Uₘₐₓ) den Regler in einen Grundzustand schaltet.

2. Heckleuchte nach Anspruch 1,
**dadurch gekennzeichnet, daß** der Strom durch einen Meßwertgeber (9), vorzugsweise einen Meßwiderstand, erfaßt wird.

3. Heckleuchte nach Anspruch 1 oder 2,
**dadurch gekennzeichnet, daß** der Stromregler (3 bis 5) einen Spannungssollwert mit einem Spannungsistwert vergleicht, und daß vorzugsweise der Stromregler (3 bis 5) ein Stellglied (12), vorteilhaft ein MOSFET, aufweist, das durch einen Vergleicher (10) des Stromreglers (3 bis 5) steuerbar ist.

4. Heckleuchte nach Anspruch 3,
**dadurch gekennzeichnet, daß** der Stromregler (3 bis 5) in wenigstens zwei Strompegel schaltbar ist, und daß vorzugsweise zur Einstellung der Strompegel das Teilerverhältnis von Widerständen (38 bis 40) veränderbar ist.

5. Heckleuchte nach einem der Ansprüche 1 bis 4,
**dadurch gekennzeichnet, daß** der Überspannungsschutz (16) ein Stellglied (17), vorzugsweise einen Transistor, aufweist, der bei Überschreiten des vorgegebenen Spannungswertes (Uₘₐₓ) schaltet.

6. Heckleuchte nach einem der Ansprüche 1 bis 5,
**dadurch gekennzeichnet, daß** den Lichtern (6 bis 8) eine Gesamtausfallerkennung (25) zugeordnet ist, die vorzugsweise einen vorgegebenen Spannungswert mit einem Ist-Spannungswert des Stromreglers (3 bis 5) vergleicht.

7. Heckleuchte nach einem der Ansprüche 1 bis 6,
**dadurch gekennzeichnet, daß** zumindest das eine Licht (6 bis 8), vorzugsweise alle Lichter, durch eine LED-Matrix (13, 21, 30) gebildet ist.

8. Heckleuchte nach Anspruch 7,
**dadurch gekennzeichnet, daß** eine LED-Ausfallerkennung (20) vorgesehen ist, die den Ausfall einer LED über die Messung eines Spannungsabfalles erfaßt, und daß vorzugsweise der Spannungsabfall über beide Hälften der LED-Matrix (13, 21, 30) gemessen wird.

9. Heckleuchte nach Anspruch 8,
**dadurch gekennzeichnet, daß** die Ausfallerkennung (20) einen Vergleicher (22) aufweist, der einen Spannungssollwert mit einem Spannungsistwert vergleicht.

10. Heckleuchte nach einem der Ansprüche 7 bis 9,
**dadurch gekennzeichnet, daß** eine Niederspannungsstufe (29) vorgesehen ist, die bei einer Schaltschwelle eine LED-Matrix (13, 21, 30) mit einer vorgegebenen Zahl von LEDs in eine LED-Matrix mit der Hälfte der LEDs umschaltet, und daß die Niederspannungsstufe (29) vorteilhaft ein Relais (31) zum Umschalten aufweist.

11. Heckleuchte nach einem der Ansprüche 1 bis 10,
**dadurch gekennzeichnet, daß** alle Funktionen ihre Versorgungsspannung aus einem Steuersignal beziehen und der Ruhestrom ≤ 1 mA ist.

## Claims

1. A tail light for motor vehicles, comprising a brake light, a turn signal light light and a rear light (6 to 8), wherein at least one of said lights (6 to 8) is formed by LEDs, which are operated over a voltage range at least approximately constant current, and with an overload protection (16) connected upstream of said light (6 to 8), which is connected upstream of a current regulator (3 to 5) and when surpassing a predetermined voltage (Uₘₐₓ) switches the regulator in a base state.

2. The tail light according to claim 1,
**characterized in that**
the current is detected by a measuring transducer (9), preferably a measuring resistor.

3. The tail light according to claim 1 or 2,
**characterized in that**
said current regulator (3 to 5) compares a reference voltage value to an actual voltage value, and that preferably said current regulator (3 to 5) comprises an actuator (12), which advantageously is a MOSFET, controllable by a comparator (10) of said current regulator (3 to 5).

4. The tail light according to claim 3,
**characterized in that**
said current regulator (3 to 5) is switchable to at least two current levels, and that preferably the divider ratio of said resistors (38 to 40) is alterable for the current level for adjusting the current level.

5. The tail light according to one of the claims 1 to 4,
**characterized in that**
said overload protection (16) comprises an actuator (17), preferably a transistor, which switches when surpassing the predetermined voltage value (Uₘₐₓ).

6. The tail light according to one of the claims 1 to 5,
**characterized in that**
a complete failure detection (25) is allocated to said lights (6 to 8), which preferably compares a predetermined voltage value to an actual voltage value of said current regulator (3 to 5).

7. The tail light according to one of the claims 1 to 6,
**characterized in that**
at least the one light (6 to 8), preferably all lights, are formed by a LED matrix (13, 21, 30).

8. The tail light according to claim 7,
**characterized in that**
a LED failure detection (20) is provided which detects the failure of a LED by measuring a voltage drop, and that preferably the voltage drop is measured across both halves of said LED matrix (13, 21, 30).

9. The tail light according to claim 8,
**characterized in that**
said failure detection (20) comprises a comparator (22), which compares a reference voltage value to an actual voltage value.

10. The tail light according to one of the claims 7 to 9,
**characterized in that**
a low voltage step (29) is provided, which switches at a switching threshold a LED matrix (13, 21, 30) with a predetermined number of LEDs to a LED matrix with half of the LEDs, and that said low voltage step (29) comprises advantageously a relay (31) for switching.

11. The tail light according to one of the claims 1 to 10,
**characterized in that**
all functions derive their supply voltage from a control signal and that the resting current is ≤ 1 mA.

## Revendications

1. Feux arrière de véhicules automobiles, comportant un feu de stop, un clignotant et un feu de position arrière (6 à 8), desquels au moins un des feux (6 à 8) est formé par des LEDs, qui sont mises en fonctionnement sur une plage de tension avec un courant au moins approximativement constant, et comportant un protecteur de surtension (16) branché en amont du feu (6 à 8), lequel protecteur est branché en amont d'un régulateur de tension (3 à 5) et active un état fondamental quand une tension prescrite (Uₘₐₓ) du régulateur est dépassée.

2. Feux arrière selon la revendication 1,
**caractérisés en ce que** le courant est détecté par un transmetteur de valeurs de mesure (9), de préférence une résistance de mesure.

3. Feux arrière selon la revendication 1 ou 2,
**caractérisés en ce que** le régulateur de courant (3 à 5) compare une valeur de consigne de la tension avec une valeur effective de la tension, et **en ce que** de préférence le régulateur de courant (3 à 5) présente un actionneur (12), de manière avantageuse un MOSFET, qui peut être commandé par un comparateur (10) du régulateur de courant (3 à 5).

4. Feux arrière selon la revendication 3,
**caractérisés en ce que** le régulateur de courant (3 à 5) peut être activé à au moins deux niveaux de courant, et **en ce que** de préférence à des fins de réglage du niveau de courant, le comportement de division des résistances (38 à 40) peut être varié.

5. Feux arrière selon une des revendications 1 à 4,
**caractérisés en ce que** le protecteur de surtension (16) présente un actionneur (17), de préférence un transistor, qui est activé quand la valeur de tension prescrite (Uₘₐₓ) est dépassée.

6. Feux arrière selon une des revendications 1 à 5,
**caractérisés en ce que** les feux (6 à 8) sont coordonnés à une unité de reconnaissance de pannes globale (25), qui compare de préférence une valeur de tension prescrite avec une valeur de tension effective du régulateur de courant (3 à 5).

7. Feux arrière selon une des revendications 1 à 6,
**caractérisés en ce que** au moins un feu (6 à 8), de préférence, tous les feux, est formé par une matrice de LEDs (13,21,30).

8. Feux arrière selon la revendication 7,
**caractérisés en ce que** une unité de reconnaissance de pannes de LEDs (20) est prévu, laquelle détecte la panne d'une LED par l'intermédiaire de la mesure d'une chute de tension, et **en ce que** de préférence la chute de tension est mesurée sur les deux moitiés de la matrice de LEDs (13,21,30).

9. Feux arrière selon la revendication 8,
**caractérisés en ce que** l'unité de reconnaissance de pannes (20) présente un comparateur (22), qui compare une valeur de consigne de tension avec une valeur effective de tension.

10. Feux arrière selon une des revendications 7 à 9,
**caractérisés en ce que** un étage de basse tension (29) est prévu, lequel commute en présence d'un seuil de commutation d'une matrice de LEDs (13,21,30) avec un nombre prescrit de LEDs à une matrice de LEDs avec la moitié des LEDs, et **en ce que** l'étage de basse tension (29) présente avantageusement un relais (31) à des fins de commutation.

11. Feux arrière selon une des revendications 1 à 10,
**caractérisés en ce que** toutes les fonctions rapportent leur tension d'alimentation à un signal de commande et le courant de repos est ≤ 1 mA.
